# EUROPÄISCHE PATENTSCHRIFT

(11) **EP 3 630 461 B1**
(45) Veröffentlichungstag und Bekanntmachung des Hinweises auf die Patenterteilung: **07.07.2021**
(21) Anmeldenummer: 18727175.4
(22) Anmeldetag: 09.05.2018
(51) Int. Cl.: B29C 65/16, B25J 9/00

(54) **QUASI-SIMULTANES LASERSCHWEISSVERFAHREN**
QUASI-SIMULTANEOUS LASER WELDING PROCESS
PROCÉDÉ DE SOUDAGE LASER QUASI-SIMULTANÉ

(30) Priorität: 23.05.2017 DE 102017111244
(43) Veröffentlichungstag der Anmeldung: 08.04.2020
(73) Patentinhaber: ConsultEngineerIP AG, 6343 Buonas (CH)
(72) Erfinder: GUBLER, Ulrich, 6343 Buonas (CH)
(74) Vertreter: Patentanwälte und Rechtsanwalt Weiß, Arat & Partner mbB
(86) Internationale Anmeldenummer: PCT/EP2018/061965
(87) Internationale Veröffentlichungsnummer: WO 2018/215208

(56) Entgegenhaltungen:
- EP-A1- 2 255 952
- EP-A2- 2 316 606
- JP-A- 2005 246 692
- JP-A- 2010 184 490
- JP-A- 2010 277 870
- JP-A- 2011 102 029
- JP-A- 2014 037 141
- US-A- 4 976 582

## Beschreibung

### Technisches Gebiet

Die Erfindung betrifft ein Verfahren und eine Vorrichtung zum quasi-simultanen Laser-Durchstrahlschweissen von Kunststoffen.

### Stand der Technik

Verfahren zum Verschweissen von Kunststoffen mittels eines Lasers sind aus dem Stand der Technik bekannt. Bei einem Laserdurchstrahlschweissen ist einer der zu verbindenden bzw. zu verschweissenden Fügepartner in hohem Masse für Laserstrahlen durchlässig, während der andere Fügepartner einen hohen Absorptionsgrad in Bezug auf den Laserstrahl aufweist. Somit sorgt der den einen Fügepartner durchquerende Laserstrahl an der zwischen beiden Bauteilen befindlichen Fügestelle für eine lokale Erwärmung. Der für das Verschweissen nötige Druck wird auf bekannte Weise aufgebaut, indem beide Fügepartner aufeinandergepresst werden.

Ein solches Laser-Durchstrahl-Schweissverfahren ist beispielsweise in der DE 10 2004 004 985 A1 und in der WO 2007 082 992 A1 beschrieben, wobei der Laserstrahl gemäss beiden Druckschriften mittels einer Anordnung umfassend mehrere Spiegel auf die zu verschweissenden Fügepartner gelenkt wird.

In derartigen bekannten Verfahren kommen üblicherweise bewegliche Spiegel zum Einsatz, die mit einem sogenannten Galvanometerantrieb ausgestattet sind. Dieser wird oftmals als Galvo oder Galvo-Spiegel abgekürzt, weshalb bekannte Vorrichtungen umfassend derartige Spiegel auch als Galvo-Scanner bezeichnet werden. Derartige Spiegel mit Galvanometerantrieb sowie ihre Verwendung in Vorrichtungen und Verfahren zum quasi-simultanen Laserdurchstrahlschweissen von Kunststoffen sind aus dem Stand der Technik hinreichend bekannt.

Der Verlauf des Laserstrahls ist bei derartigen Verfahren dahingehend limitiert, dass er, vom Laser aus gesehen, stets von einem letzten im Strahlengang angeordneten Spiegel auf die zu verschweissenden Kunststoffe bzw. Fügepartner gelenkt wird. Dieser Spiegel kann zwar durch den Galvanometerantrieb verschwenkt werden, er kann seine räumliche Lage aber ansonsten nicht verändern. Aus dieser Limitation ergeben sich einige Nachteile.

Beispielsweise kann es zu Strahlabschattungen durch hohe Bauteilwände oder andere Abschnitte eines der Fügepartner kommen.

Weiterhin können vorhandene Anschlüsse, welche neben oder über der Schweissnaht angeordnet sind, zu Strahlabschattungen führen.

Ausserdem kann es beispielsweise bei konvexen Bauteilen zu sehr ungünstigen Einstrahlwinkeln des Laserstrahls kommen bzw. zu ungünstigen Winkeln zwischen einer Bauteiloberfläche und dem eintreffenden Laserstrahl.

Ohne die vorgenannten Nachteile zu adressieren schlagen die EP 1 048 439 A2 und die EP 2 255 952 A1 zwar vor, den Strahlausgang, von welchem der Laserstrahl ausgeht, an einem Roboterarm eines bekannten Knickarmroboters anzuordnen. Wie in der EP 2 255 952 A1 auch erkannt wurde, ergibt sich bei einer solchen Anordnung jedoch das Problem, dass der Roboter keine hohen Geschwindigkeiten erzielen kann.

Für das quasi-simultane Laserdurchstrahlschweissen werden jedoch sehr hohe Geschwindigkeiten benötigt, da hier der Laserstrahl so schnell zwischen den Schweissorten abgelenkt oder entlang der Schweissnaht geführt wird, dass der Kunststoff an allen Schweissorten gleichzeitig erwärmt und plastifiziert wird und so das Verschweissen quasi an allen Schweissorten gleichzeitig erfolgt.

Die EP 2 255 952 A1 schlägt als Alternative zu einem am Roboterarm vorgesehenen Strahlausgang abermals bekannte Galvo-Scanner vor, um hohe Geschwindigkeiten zu erzielen. Dies führt jedoch zu den bereits beschriebenen Nachteilen.

### Aufgabe der Erfindung

Die Aufgabe der vorliegenden Erfindung ist es, die Nachteile aus dem Stand der Technik zu überwinden. Insbesondere sollen ein Verfahren und eine Vorrichtung zum quasi-simultanen Verschweissen von Kunststoffen bzw. zum quasi-simultanen Laserdurchstrahlschweissen bereitgestellt werden, welche sowohl hohe Geschwindigkeiten erzielen, als auch die Limitationen bekannter Galvo-Scanner überwinden.

### Lösung der Aufgabe

Zur Lösung der Aufgabe führen die Gegenstände der unabhängigen Ansprüche.

Vorteilhafte Ausgestaltungen sind in den Unteransprüchen beschrieben.

Die vorliegende Erfindung schlägt ein Verfahren zum quasi-simultanen Verschweissen von Kunststoffen an zumindest zwei Schweissorten mittels eines Laserstrahls (Laser-Durchstrahlschweissen), vor wobei der Laserstrahl von einer Laseroptik ausgeht, welche einer Plattform eines Deltaroboters zugeordnet ist und durch eine Bewegung dieser Plattform geführt wird.

Die zu verschweissenden Kunststoffe bzw. Kunststoff-Teile können auch als Fügepartner bezeichnet werden.

Deltaroboter sind aus dem Stand der Technik bekannt und im Hinblick auf die erfindungsgemässe Vorrichtung nachstehend beschrieben. Deltaroboter können dank ihrer nachstehend näher erläuterten parallelen Kinematik beispielsweise Konturen deutlich schneller abfahren als Knickarm-Roboter oder andere Roboter.

Unter einem Schweissort wird im Rahmen der vorliegenden Erfindung beispielsweise ein Punkt auf einer Schweissnaht verstanden. Vorzugsweise wird bei dem erfindungsgemässen Schweissverfahren eine Schweissnaht erzeugt. Eine Schweissnaht setzt sich stets aus einer Vielzahl von Schweisspunkten zusammen bzw. kann als Aneinanderreihung einer Vielzahl einzelner Schweisspunkte gedacht werden.

Der Laser, also das Gerät zur Erzeugung des Laserstrahls, kann auf der Plattform angeordnet sein. Um die Plattform möglichst leicht zu gestalten, ist der Laser jedoch vorzugsweise an einer anderen Stelle, beispielsweise an einer Grundplatte des Deltaroboters befestigt, und steht über einen optischen Leiter mit der Laseroptik in Verbindung.

Unter einer Führung des Laserstrahls wird im Rahmen der vorliegenden Erfindung jede Massnahme verstanden, welche die räumliche Orientierung bzw. den räumlichen Verlauf des Laserstrahls verändert bzw. den Laserstrahl bewegt. Üblicherweise wird hierzu zumindest die Laseroptik bewegt. Es kann aber auch daran gedacht sein, dass bewegliche Spiegel den Laserstrahl ablenken und somit seinen räumlichen Verlauf verändern.

Einzelheiten werden in Bezug auf die erfindungsgemässe Vorrichtung erläutert.

Es kann daran gedacht sein, dass der Laserstrahl durch eine Kombination aus der Bewegung der Plattform und einer weiteren Bewegung geführt wird, welche von einer der Plattform zugeordneten Bewegungseinrichtung bewirkt wird.

Als Bewegungseinrichtung kommen hierbei zahlreiche Einrichtungen in Betracht. Grundsätzlich kann an jede Einrichtung gedacht sein, welche geeignet ist, die räumliche Orientierung des Laserstrahls zu beeinflussen. Einzelheiten sind mit Hinblick auf die erfindungsgemässe Vorrichtung erläutert.

Es kann daran gedacht sein, dass zumindest eine Untereinheit der Bewegungseinrichtung relativ zur Plattform bewegt wird, um die weitere Bewegung zu bewirken. Bei dieser zumindest einen Untereinheit kann es sich beispielsweise um zumindest einen Spiegel handeln, welcher gegenüber der Plattform schwenkbar angeordnet ist. Hierbei kann an einen Galvo-Spiegel gedacht sein. Weiterhin kann es sich bei dieser zumindest einen Untereinheit um ein drehbar an der Plattform festgelegtes Element handeln, an welchem die Laseroptik festgelegt bzw. angeordnet sein kann. Beide Varianten sind nachstehend erläutert.

Im Rahmen der vorliegenden Erfindung wird unter einer drehbaren Festlegung, ebenso wie unter einer (ver)schwenkbaren und einer rotierbaren Festlegung eine Festlegung verstanden, welche die Ausführung einer Rotations- bzw. Drehbewegung des betreffenden Bauteils ermöglicht.

Ferner kann daran gedacht sein, dass die zumindest eine Untereinheit durch eine Welle bewegt wird. Hierbei kann der Antrieb, wie nachstehend in Bezug auf die Vorrichtung näher erläutert wird, ausserhalb der Plattform angeordnet sein, um die Plattform möglichst leicht zu gestalten.

Wie bereits erwähnt kann daran gedacht sein, dass der Laserstrahl durch zumindest einen gegenüber der Plattform schwenkbar angeordneten Spiegel abgelenkt wird. Vorzugsweise ist der zumindest eine Spiegel hierbei schwenkbar gegenüber einer gedachten Ebene angeordnet, innerhalb welcher die Plattform im Wesentlichen liegt.

Hierbei kann an verschiedene Schwenk-Bewegungen gedacht sein. Vorzugsweise wird unter einer Schwenkbewegung jedoch vorzugsweise eine Rotation verstanden, wobei die Rotationsachse innerhalb der vorgenannten gedachten Eben liegt oder zu dieser orthogonal steht.

Weiterhin kann daran gedacht sein, mehrere der vorstehend beschriebenen schwenkbaren Spiegel vorzusehen. Insbesondere ist daran gedacht, zwei Spiegel vorzusehen. Die Schwenk- bzw. Rotationsachsen dieser Spiegel sind vorzugsweise orthogonal zueinander angeordnet. Hierbei sind die Spiegel vorzugsweise so angeordnet, dass der die Laseroptik verlassende Laserstrahl zunächst an einem ersten Spiegel reflektiert wird, wobei der von diesem Spiegel ausgehende reflektierte Laserstrahl sodann an einem zweiten Spiegel reflektiert wird. Der von dem zweiten Spiegel ausgehend Strahl wird vorzugsweise auf die zu verschweissenden Werkstücke gelenkt. Durch entsprechende Rotation bzw. Verschwenkung beider Spiegel um ihre Rotationsachsen lässt sich die räumliche Orientierung des Laserstrahls beeinflussen, um voneinander beabstandete Schweisspunkte zu erreichen.

Wie ebenfalls bereits erwähnt kann weiterhin daran gedacht sein, dass die Laseroptik gegenüber der Plattform beweglich gelagert ist, um den Laserstrahl zu führen. Hierzu kann die Laseroptik an einem Element festgelegt sein, welches wiederum drehbar an der Plattform festgelegt ist. Eine derartige Anordnung ist insbesondere als Alternative zu den vorstehend beschriebenen Anordnungen umfassend zumindest einen Spiegel zu sehen.

Es kann daran gedacht sein, dass eine Temperatur des Kunststoffes mittels eines Pyrometers gemessen wird, wobei ein Messergebnis zur Auswertung und/oder Regelung des Verfahrens herangezogen wird. Hierbei wird die Temperatur des Kunststoffes vorzugsweise im Bereich der Schweisspunkte oder der Schweissnaht gemessen.

Hierbei kann die Temperatur entweder kontinuierlich oder zu bestimmten Zeitpunkten intervall-artig gemessen werden.

Ist beispielsweise bekannt, welche Temperatur die Schweisspunkte bzw. die Schweissnaht aufweisen müssen, damit ein gewünschter Schweiss-Erfolg erzielt wird bzw. die Beschaffenheit der Schweissnaht in den gewünschten Grenzen liegt, so kann durch die Messung der Temperatur mittels des Pyrometers auf einfache Weise festgestellt werden, wann der Schweissprozess beendet werden kann. Hierbei wird die gemessene Temperatur direkt für die Regelung des Verfahrens herangezogen. Die gemessene Temperatur kann daneben auch in beliebiger anderer Weise für die Regelung des Verfahrens herangezogen werden.

Weiterhin kann gemessene Temperatur, alternativ oder komplementär, auch für eine Auswertung des Verfahrens aufgezeichnet werden. Indem die Erwärmung der Schweissnaht über eine Vielzahl von Schweissprozessen hinweg gemessen und entsprechende Daten gespeichert werden, kann beispielsweise zu einem späteren Zeitpunkt im Rahmen eines Vergleichs festgestellt werden, ob bestimmte Probleme während des Schweissens auftraten oder bestimmte Bauteile als Ausschuss aussortiert werden müssen. Die gemessene Temperatur kann in beliebiger Weise für eine Auswertung herangezogen werden.

Die vorliegende Erfindung umfasst auch eine Vorrichtung zum quasi-simultanen Verschweissen von Kunststoffen umfassend einen Deltaroboter mit einer Plattform, wobei der Plattform eine Laseroptik zugeordnet ist. Hierbei handelt es sich also um eine Vorrichtung zum quasi-simultanen Laser-Durchstrahlschweissen.

Deltaroboter sind aus dem Stand der Technik bekannte parallel-kinematische Maschinen. Sie werden beispielsweise für die Handhabung kleiner Objekte mit grosser Geschwindigkeit verwendet. Zum Aufbau und zur Funktion von Deltarobotern sei lediglich beispielhaft auf die US 4 976 582 verwiesen.

Deltaroboter umfassen eine bewegliche Plattform, welche beispielsweise über drei Arme mit einer Grundplatte verbunden sein kann. Üblicherweise beherbergt die Grundplatte jeweils einen rotatorischen Antrieb für jeden Arm. Die Arme umfassen nur Streben und passive Gelenke, werden also lediglich über die Rotation des jeweiligen Antriebs bewegt.

Die Plattform des Deltaroboters dient vorzugsweise dazu, den von der Laseroptik ausgehenden Laserstrahl zu führen, was in Bezug auf das erfindungsgemässe Verfahren vorstehend bereits beschrieben wurde.

Unter einer Laseroptik wird im Rahmen der vorliegenden Erfindung eine Anordnung umfassend zumindest ein optisches Bauteil verstanden. Beispielsweise kann an Kollimatoren wie Kollimator-Linsen gedacht sein. Ferner kann an Bauteile zur Fokussierung, beispielsweise an entsprechende Linsen gedacht sein. Es kann alternativ auch an entsprechend gekrümmte Spiegel gedacht sein, welche eine Kollimation und/oder Fokussierung bewirken. Üblicherweise geht der Laserstrahl von einem fokussierenden Bauteil aus, dem ein Kollimator vorgeschalten ist.

Der Laser, also das Bauteil, welches den Laserstrahl erzeugt, kann auf der Plattform des Deltaroboters angeordnet sein. Um ein Gewicht der Plattform möglichst niedrig zu halten ist der Laser jedoch vorzugsweise andernorts angeordnet, er kann beispielsweise an der Grundplatte befestigt sein. In diesem Fall ist an Stelle des gesamten Lasers nur die Laseroptik an der Plattform des Deltaroboters angeordnet und steht beispielsweise über einen optischen Leiter mit dem Laser in Verbindung.

Die Vorrichtung kann also derart ausgestaltet sein, dass der Plattform ein erstes Ende eines optischen Leiters zugeordnet ist, welches mit der Laseroptik verbunden ist, wobei ein zweites Ende des optischen Leiters mit einem Laser verbunden ist, wobei dieser Laser ausserhalb der Plattform angeordnet ist.

Der optische Leiter behindert die von der Plattform des Deltaroboters durchgeführten Bewegungen nicht und die Anordnung erhöht das Gewicht der Plattform nur in geringem Umfang, weshalb die leichte Plattform schnelle Bewegungen ausführen kann.

Die Laseroptik kann an einem Element festgelegt sein, welches drehbar an der Plattform festgelegt ist. Es kann auch daran gedacht sein, dass dieses Element nicht direkt sondern über ein zweites Element an der Plattform festgelegt ist, wobei das erstgenannte Element drehbar am zweiten Element festgelegt ist und das zweite Element wiederum drehbar an der Plattform festgelegt ist. Eine solche Anordnung kann zweckmässigerweise durch eine kardanische Aufhängung bereitgestellt werden. Die kardanische Aufhängung stellt eine Untereinheit einer Bewegungseinrichtung dar, welche geeignet ist, durch ihre Bewegung den räumlichen Verlauf des Laserstrahls zu beeinflussen. In diesem Fall kann die Bewegungseinrichtung weiterhin beispielsweise Antriebe für die Drehlager der kardanischen Aufhängung umfassen. Neben einer kardanischen Aufhängung kommen auch weitere Bewegungseinrichtungen in Betracht, die zumindest eine Untereinheit aufweisen, welche relativ zur Plattform bewegbar ist, um den räumlichen Verlauf des Laserstrahls zu beeinflussen.

Indem der räumliche Verlauf des Laserstrahls sowohl durch die Bewegung der Plattform beeinflusst wird als auch durch die von der Bewegungseinrichtung bewirkte weitere Bewegung, nämlich diejenige der Untereinheit, kann der Laserstrahl situationsangepasst ausgerichtet werden, was in diesem Umfang mit bekannten Vorrichtungen zum Laserdurchstrahlschweissen von Kunststoffen nicht möglich war.

Insbesondere die kardanische Aufhängung ermöglicht eine hohen Grad an Bewegungsfreiheit für die Laseroptik, was wiederum dazu führt, dass der Laserstrahl sehr flexibel in seinem räumlichen Verlauf geführt werden kann.

Alternativ zur kardanischen Aufhängung kann daran gedacht sein, zumindest einen gegenüber der Plattform schwenkbaren Spiegel vorzusehen. Hierbei stellt beispielsweise eine optische Anordnung umfassend zumindest einen solchen Spiegel die Bewegungseinrichtung dar, wobei der schwenkbare Spiegel die Untereinheit darstellt. Dieser zumindest eine schwenkbare Spiegel dient dazu, den Laserstrahl zu reflektieren. Er ist vorzugsweise an der Plattform schwenkbar befestigt. Es kann sich hierbei um zumindest einen Galvo-Spiegel handeln.

Es kann daran gedacht sein, zwei gegenüber der Plattform schwenkbare Spiegel vorzusehen, wobei der Laserstrahl ausgehend von der Laseroptik zunächst an einem ersten Spiegel und sodann an einem zweiten Spiegel reflektiert wird, bevor er auf die Schweisspunkte bzw. die Schweissnaht gelenkt wird. Hierbei kann daran gedacht sein, die Schwenk- bzw. Rotationsachsen der Spiegel orthogonal zueinander anzuordnen, um ein grosses Spektrum möglicher räumlicher Orientierungen des Laserstrahls bewirken zu können.

Es kann an zahlreiche weitere Bewegungseinrichtungen und Untereinheiten gedacht sein. Wie vorstehend anhand der Beispiele erläutert, ist die Untereinheit vorzugsweise geeignet, über eine Rotation relativ zu einer gedachten Ebene, innerhalb der die Plattform liegt, den räumlichen Verlauf des Laserstrahls zu beeinflussen.

Ferner ist auch eine Kombination aus einem drehbar an der Plattform festgelegten Element und einem schwenkbaren Spiegel denkbar. Beispielsweise kann die Laseroptik auf einem Element befestigt sein, welches derart an der Plattform festgelegt ist, dass es gegenüber dieser um eine Achse drehbar gelagert ist. Weiterhin kann ein Spiegel vorgesehen sein, welcher gegenüber der Plattform um eine Achse drehbar ist, welche orthogonal zur Drehachse des vorgenannten Elements angeordnet ist. Abhängig von einem Grad der Rotation bzw. von einer Auslenkung des Elements gegenüber der Plattform trifft der Laserstrahl auf einer anderen Stelle des Spiegels auf. Wiederum abhängig vom Grad der Rotation des Spiegels wird der Laserstrahl dann unterschiedlich reflektiert. Durch eine solche Anordnung kann dasselbe Ergebnis bzw. dieselbe Abdeckung erreicht werden, wie durch eine Anordnung umfassend zwei Spiegel oder eine kardanische Aufhängung wie vorstehend beschrieben.

Die zumindest eine Untereinheit, beispielsweise das vorstehend beschriebene drehbare Element oder der vorstehend beschriebene Spiegel, müssen mit einem Antrieb verbunden sein, um bewegt zu werden. Um das Gewicht der Plattform möglichst gering zu halten kann daran gedacht sein, diese Antriebe nicht auf der Plattform anzuordnen sondern die zumindest eine Untereinheit über eine Welle mit dem Antrieb zu verbinden. Es kann also daran gedacht sein, dass zumindest eine Welle vorgesehen ist, wobei ein erste Ende der Welle dem drehbaren Element oder dem Spiegel zugeordnet ist, geeignet, eine Bewegung des drehbaren Elements oder des Spiegels zu bewirken, wobei ein zweites Ende der Welle einem Antrieb zugeordnet ist, welcher ausserhalb der Plattform angeordnet ist.

Der Antrieb kann an der Grundplatte oder an einem anderen Ort befestigt sein.

Die Vorrichtung kann ein Pyrometer umfassen, dessen Funktion bereits in Bezug auf das erfindungsgemässe Verfahren beschrieben wurde.

Das Pyrometer kann der Plattform zugeordnet bzw. an ihr befestigt sein. Beispielsweise kann das Pyrometer in der Laseroptik vorgesehen sein.

Um das Gewicht der Plattform möglichst gering zu halten, kann das Pyrometer auch andernorts, beispielsweise an der Grundplatte, festgelegt sein. Hierbei kann das Pyrometer mit einem Ende eines optischen Leiters in Verbindung stehen, dessen gegenüberliegendes Ende an der Plattform festgelegt ist, um dem Pyrometer die zu messende Strahlung zuzuleiten.

Hierbei kann es sich sowohl um denselben optischen Leiter handeln, welcher den ausserhalb der Plattform angeordneten Laser mit der Laseroptik verbindet, als auch über einen separaten optischen Leiter.

Es sei darauf hingewiesen, dass die vorliegende Erfindung auch ein System umfasst, welche zumindest aus einem Deltaroboter wie vorstehend beschrieben besteht und weiterhin beispielsweise ein Pyrometer, zumindest einen Antrieb für die Untereinheit, sowie weitere Komponenten umfassen kann, welche nicht an dem Deltaroboter festgelegt sind.

Um das Gewicht der Plattform möglichst gering zu halten, kann daran gedacht sein, dass die Laseroptik Halbzoll-Bauteile umfasst. Unter Halbzoll-Bauteilen werden hierbei beispielsweise Halbzoll-Optiken verstanden, deren Abmessungen also etwa 12.7 mm betragen.

Ferner kann daran gedacht sein, sämtliche Bestandteile der Plattform und sämtliche auf ihr angeordnete Bestandteile aus möglichst leichten Materialien wie beispielsweise Faser-Composit-Werkstoffen oder anderen Faserverbundwerkstoffen herzustellen, um Gewicht einzusparen.

Die vorliegende Erfindung umfasst ferner im Allgemeinen die Verwendung eines Delta-Roboters zum quasi-simultanen Verschweissen von Kunststoffen, insbesondere zum quasi-simultanen Laserdurchstrahlschweissen.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figuren 1a bis 1d jeweils einen Galvo-Scanner 9 gemäss dem Stand der Technik in verschiedenen Positionen und zu verschweissende Bauteile 10, 11 Figuren 2a bis 2d jeweils eine Laseroptik 2 einer erfindungsgemässen Vorrichtung, in verschiedenen Positionen, sowie zu verschweissende Bauteile 10, 11
Figur 3 ein Ausführungsbeispiel einer erfindungsgemässen Vorrichtung umfassend einen Deltaroboter 1,
Figur 4 ein weiteres Ausführungsbeispiel einer erfindungsgemässen Vorrichtung umfassend einen Deltaroboter 1,
Figur 5 eine Plattform 4 eines Ausführungsbeispiels einer erfindungsgemässen Vorrichtung umfassend eine kardanische Aufhängung sowie
Figur 6 eine Plattform 4 eines weiteren Ausführungsbeispiels einer erfindungsgemässen Vorrichtung umfassend zwei Spiegel 15.1, 15.2.

### Ausführungsbeispiel

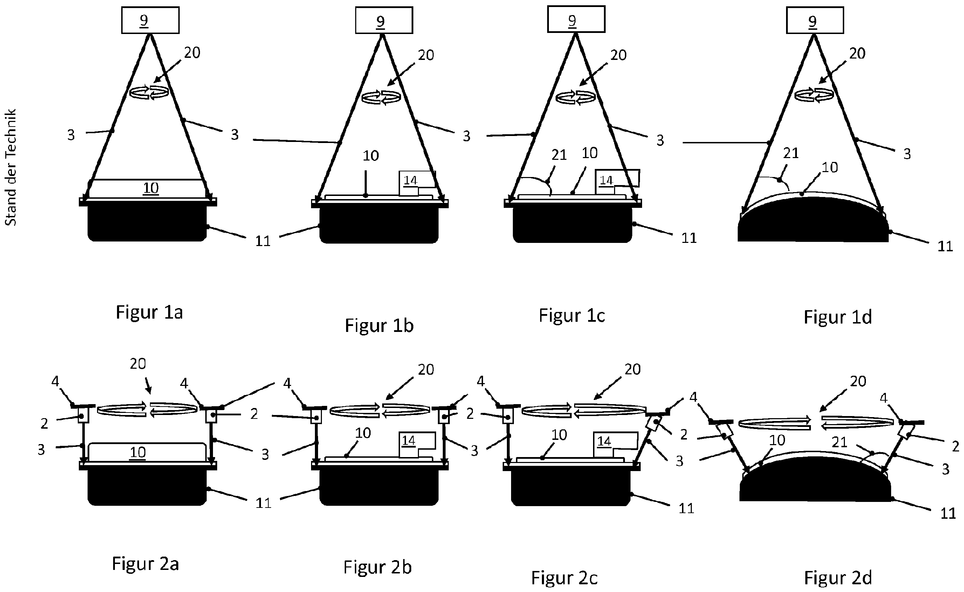

In den Figuren 1a bis 1d ist jeweils einen Galvo-Scanner 9 dargestellt. Der Verlauf eines von ihm ausgehenden Laserstrahls in jeweils zwei verschiedenen Positionen des Galvo-Scanners 9 ist jeweils durch einen Pfeil 3 angedeutet. Ferner sind ein lasertransparentes Bauteil 10 und ein laserabsorbierendes Bauteil 11 dargestellt.

In den Figuren 2a bis 2d ist jeweils eine Laseroptik 2 dargestellt. Der Verlauf eines von ihr ausgehenden Laserstrahls in jeweils zwei verschiedenen Positionen der Laseroptik 2 ist jeweils durch einen Pfeil 3 angedeutet. Ferner sind ein lasertransparentes Bauteil 10 und ein laserabsorbierendes Bauteil 11 dargestellt.

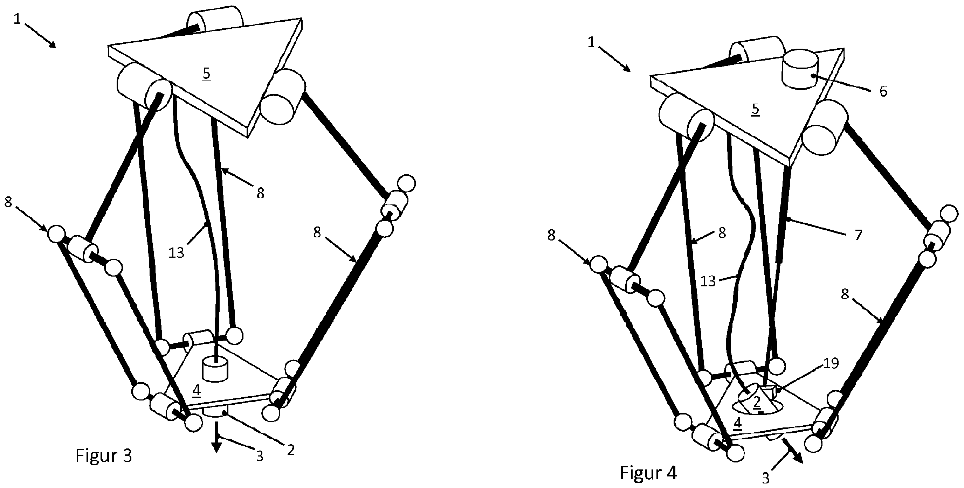

In Figur 3 ist Deltaroboter 1 umfassend eine Grundplatte 5, drei Arme 8 und eine Plattform 4 erkennbar. Deltaroboter 1 sind bekannt, auf die detaillierte Darstellung und Bezeichnung der rotatorischen Antriebe, der Gelenke und weiterer bekannter Bauteile wurde daher verzichtet.

An der Plattform 4 ist eine Laseroptik 2 befestigt, welche über einen optischen Leiter 13 mit einem an der Grundplatte 5 befestigten und in der Zeichnung nicht erkennbaren Laser in Verbindung steht.

Die Ausführungsform nach Figur 4 unterscheidet sich von derjenigen nach Figur 3 nur dahingehend, dass die Laseroptik 2 nicht drehfest mit der Plattform 4 verbunden ist, sondern dieser über eine Untereinheit 19 einer nicht weiter dargestellten Bewegungseinrichtung drehbar zugeordnet ist. Die Untereinheit 19 steht über eine Welle 7 mit einem Antrieb 6 in Verbindung.

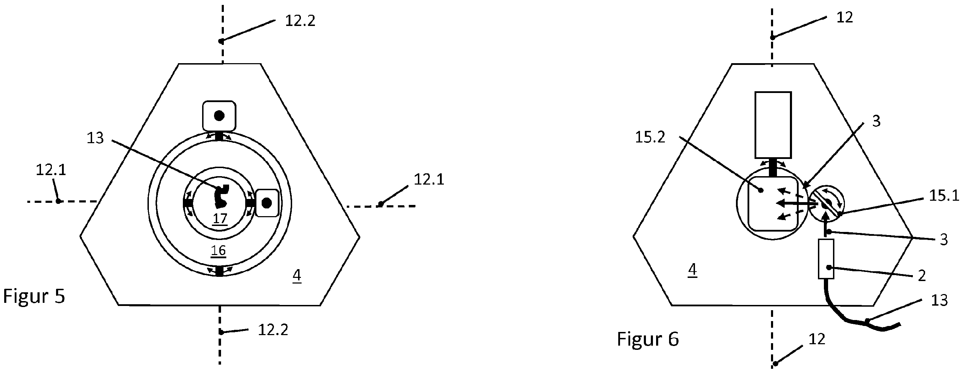

In Figur 5 ist eine Plattform 4 eines Ausführungsbeispiels einer erfindungsgemässen Vorrichtung mit einer kardanischen Aufhängung dargestellt, welche einen äusseren Ring 16 und einen inneren Ring 17 umfasst. Der optische Leiter 13 ist etwa in einer Mitte des inneren Rings 17 erkennbar, die Laseroptik ist auf Grund der Perspektive der Figur 5 nicht erkennbar.

In Figur 6 ist eine Plattform 4 eines weiteren Ausführungsbeispiels einer erfindungsgemässen Vorrichtung umfassend zwei Spiegel 15.1, 15.2 dargestellt. Die Laseroptik 2 mit dem optischen Leiter 13 sind erkennbar.

Bezugnehmend auf die Figuren 1 bis 6 erklärt sich die Funktionsweise der erfindungsgemässen Vorrichtung folgendermassen:

Der bekannte Galvo-Scanner 9 gemäss den Figuren 1a bis 1d kann durch Verschwenken zumindest eines zum Galvo-Scanner 9 gehörenden nicht im Detail dargestellten Spiegels den Laserstrahl, welcher durch den Pfeil 3 angedeutet ist, ausrichten bzw. seinen räumlichen Verlauf beeinflussen. Dies wird durch Pfeile 20 angedeutet.

In den Figuren 1a bis 1d sollen an den Stellen, an welchen die Pfeile 3 auf die Bauteile 10, 11 auftreffen, Schweisspunkte bzw. eine Schweissnaht erzeugt werden.

In Figur 1a umfasst das lasertransparente Bauteil 10 eine hohe Bauteilwand, wodurch es zu einer Strahlabschattung kommt, was wiederum den Laserschweissprozess beeinträchtigt.

In den Anordnungen gemäss den Figuren 1b und 1c umfasst das lasertransparente Bauteil 10 einen Anschluss 14, welcher derart neben (Figur 1b) oder über (Figur 1c) einer angedachten Schweissnaht angeordnet ist, dass es ebenfalls zu einer Strahlabschattung kommt. Eine vom Laserstrahl zu durchquerende Strecke ist im Fall einer solchen Strahlabschattung durch den Anschluss 14 viel grösser als die zu durchquerende Strecke an anderen Stellen des lasertransparenten Bauteils 10. Ferner kann der Laserstrahl durch etwaige gekrümmte Wände des Anschlusses 14 gebrochen werden. Daher ist es nicht möglich, den Laserschweissprozess so durchzuführen, dass der Laserstrahl den Anschluss 14 an entsprechenden Stellen einfach passiert, um die Schweissnaht zu erzeugen.

In der Anordnung nach Figur 1d sind die Bauteile 10, 11 konvex ausgebildet, was zu einem ungünstigen Einstrahlwinkel des durch den Pfeil 3 angedeuteten Laserstrahls führt. Im Vergleich beispielsweise zur Figur 1c ist der Figur 1d deutlich entnehmbar, dass der Einstrahlwinkel bzw. der Winkel 21, unter welchem der Laserstrahl 3 auf die Bauteile 10, 11 auftrifft, deutlich kleiner ist. Entsprechendes gilt für einen Vergleich mit den Figuren 1a und 1b, in welchen der Winkel 21 der Übersicht halber nicht dargestellt ist.

Wie aus den Figuren 2a bis 2d hervorgeht, überwindet die erfindungsgemässe Vorrichtung die in den Figuren 1a bis 1d aufgezeigten Probleme.

Die Laseroptik 2 kann die in den Figuren 2a und 2b gezeigten Positionen einnehmen, weil sie an der Plattform 4 befestigt ist. Dies ermöglicht es, die Laseroptik 2 durch entsprechende Bewegung der Plattform 4 derart oberhalb der Bauteile 10, 11 zu positionieren, dass der durch die Pfeile 3 angedeutete Laserstrahl im Wesentlichen senkrecht auf einer Grenzfläche zwischen dem lasertransparenten Bauteil 10 und dem laserabsorbierenden Bauteil 11 auftrifft, was in den Figuren 2a und 2b gezeigt ist. Somit führt weder eine in der Figur 2a dargestellte hohe Bauteilwand des lasertransparenten Bauteils 10 noch ein Anschluss 14, welcher gemäss Figur 2b neben der zu erzeugenden Schweissnaht angeordnet ist, zu einer Strahlabschattung.

In den Figuren 2c und 2d ist dargestellt, dass eine Bewegung der Laseroptik 2, welche beispielsweise durch eine Untereinheit 19 einer Bewegungseinrichtung (nicht dargestellt) bewirkt werden kann, dazu beiträgt, die in den korrespondierenden Figuren 1c und 1d dargestellten Probleme zu überwinden.

Aus den Figuren 2c und 2d geht hervor, dass der räumliche Verlauf des Laserstrahls nicht nur durch die räumliche Orientierung bzw. Bewegung der Plattform 4, sondern auch durch eine Bewegung der Laseroptik 2 gegenüber der Plattform 4 beeinflusst werden kann. Somit stellt auch der über der Schweissnaht angeordnete Anschluss 14 in Figur 2c kein Problem dar, weil eine Kombination auf Bewegung der Plattform 4 und Bewegung der Laseroptik 2 gegenüber der Plattform 4 dazu führt, dass keine Strahlabschattung auftritt.

Entsprechendes gilt für die konvexen Bauteile 10, 11 in Figur 2d, so dass der Winkel 21 im Gegensatz zum korrespondierenden Winkel 21 der Figur 1d deutlich näher an einem zu bevorzugenden rechten Winkel liegt.

Wie aus den Figuren 2a bis 2d hervorgeht, liegt die Plattform 4 des nicht gezeigten Deltaroboters stets in derselben gedachten Ebene und neigt sich nicht, unabhängig davon, welche Position sie einnimmt. Dies ist auf die Parallelkinematik des Deltaroboters zurückzuführen.

Es sei erwähnt, dass anstelle einer Bewegung der Laseroptik 2 gegenüber der Plattform 4, wie sie in den Figuren 2c und 2d dargestellt ist, auch daran gedacht sein kann, den Laserstrahl durch zumindest einen Spiegel abzulenken, ohne dass die Laseroptik 2 bewegt werden muss. Durch eine Anordnung umfassend zumindest einen Spiegel kann dasselbe Ergebnis erreicht werden, wie das in den Figuren 2c und 2d gezeigte.

Die in den Figuren 3 und 4 gezeigten Ausführungsformen der vorliegenden Erfindung sind geeignet, die in den Figuren 2a bis 2d gezeigten Operationen auszuführen, indem sich die Arme 8 und gegebenenfalls (Figur 4) die Laseroptik 2 in Relation zur Plattform 4 bewegen. Hierbei sei erwähnt, dass der durch den Pfeil 3 angedeutete Laserstrahl durch einen unterhalb der Grundplatte 5 angeordneten und daher in den Figuren 3 und 4 nicht sichtbaren Laser erzeugt wird, wobei die Laseroptik 2 über einen optischen Leiter 13 mit dem Laser in Verbindung steht.

Die Untereinheit 19, welche in der Anordnung gemäss Figur 4 die Bewegung der Laseroptik 2 relativ zur Plattform 4 bewirkt, wird über eine Welle 7 angetrieben, welche mit einem Antrieb 6 in Verbindung steht.

Indem der Laser und der Antrieb 6 nicht auf der Plattform 4 angeordnet sind, kann das Gewicht der Plattform 4 möglichst niedrig gehalten werden.

In Bezug auf Figur 3 sei erwähnt, dass der durch den Pfeil 3 angedeutete Laserstrahl stets innerhalb eines bestimmten Winkels gegenüber der Plattform 4 verläuft, da die Laseroptik 2 drehfest mit der Plattform 4 verbunden ist. Hierbei muss es sich allerdings nicht um einen rechten Winkel handeln wie in der Ausführungsform nach Figur 3, gemäss welcher der Laserstrahl orthogonal zu einer gedachten Ebene verläuft, innerhalb welcher die Plattform 4 liegt.

In der Ausführungsform nach Figur 5 ist die (nicht sichtbare) Laseroptik 2 drehfest mit dem inneren Ring 17 der kardanischen Aufhängung verbunden. Durch Drehung des äusseren Rings 16 um die Drehachse 12.2 und Drehung des inneren Rings 17 um die Drehachse 12.1 ist es möglich, die Laseroptik 2 gegenüber der gedachten Ebene, innerhalb welcher die Plattform 4 liegt, zu bewegen. Wie bereits beschrieben kann somit der räumliche Verlauf des Laserstrahls beeinflusst werden.

Die Drehung um die Drehachsen 12.1, 12.2 ist durch Pfeile angedeutet. Kardanische Aufhängungen und ihre Funktion sind hinreichend aus dem Stand der Technik bekannt. Die Drehung der Ringe 16, 17 erfolgt vorzugsweise über jeweils eine Welle (nicht dargestellt), so dass der zugehörige Antrieb, welcher die Drehung bewirkt, nicht auf der Plattform 4 angeordnet sein muss.

In der Ausführungsform nach Figur 6 ist die Laseroptik 2 drehfest mit der Plattform 4 verbunden. Um die räumliche Orientierung des Laserstrahls relativ zur Plattform 4 dennoch zu verändern, wird dieser auf einen ersten Spiegel 15.1 gelenkt, von diesem reflektiert und sodann auf einen zweiten Spiegel 15.2 gelenkt, von welchem er ebenfalls reflektiert wird. Durch Rotation des ersten Spiegels 15.1 um eine orthogonal zur Plattform-Ebene verlaufende Drehachse (nicht dargestellt, angedeutet durch einen Doppelpfeil neben dem Spiegel 15.1) kann der Strahl, angedeutet durch Pfeile 3, auf verschiedene Abschnitte bzw. Orte des zweiten Spiegels 15.2 gelenkt werden. Zwei alternative Verläufe sind durch gestrichelt dargestellte Pfeile 3 angedeutet, welche vom ersten Spiegel 15.1 ausgehen. Der zweite Spiegel 15.2 kann um die Drehachse 12 rotieren und den Strahl somit, abhängig von der durchgeführten Rotation, abermals ablenken. Die in Figur 6 gezeigte Anordnung ermöglicht somit ebenso wie die in Figur 5 gezeigte Anordnung, den Verlauf des Laserstrahls relativ zur Plattform 4 zu verändern.

Bei den Spiegeln 15.1, 15.2. handelt es sich vorzugsweise um Galvo-Spiegel.

**Bezugszeichenliste**

| | | | | | |
|---|---|---|---|---|---|
| 1 | Deltaroboter | 34 | | | |
| 2 | Laseroptik | 35 | | | |
| 3 | Pfeil | 36 | | | |
| 4 | Plattform | 37 | | | |
| 5 | Grundplatte | 38 | | | |
| 6 | Antrieb | 39 | | | |
| 7 | Welle | 40 | | | |
| 8 | Arm | 41 | | | |
| 9 | Galvo-Scanner | 42 | | | |
| 10 | Lasertransparentes Bauteil | 43 | | | |
| 11 | Laserabsorbierendes Bauteil | 44 | | | |
| 12 | Drehachse | 45 | | | |
| 13 | Optischer Leiter | 46 | | | |
| 14 | Anschluss | 47 | | | |
| 15 | Spiegel | 48 | | | |
| 16 | Ausserer Ring | 49 | | | |
| 17 | Innerer Ring | 50 | | | |
| 18 | Drehachse | 51 | | | |
| 19 | Untereinheit | 52 | | | |
| 20 | Pfeil | 53 | | | |
| 21 | Winkel | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum quasi-simultanen Verschweissen von an zumindest zwei Schweissorten mittels eines Laserstrahls,
**dadurch gekennzeichnet, dass** der Laserstrahl von einer Laseroptik (2) ausgeht, welche einer Plattform (4) eines Deltaroboters (1) zugeordnet ist, und durch eine Bewegung dieser Plattform (4) geführt wird.

2. Verfahren nach Anspruch 1, **dadurch gekennzeichnet, dass** der Laserstrahl durch eine Kombination aus der Bewegung der Plattform (4) und einer weiteren Bewegung geführt wird, welche von einer der Plattform (4) zugeordneten Bewegungseinrichtung bewirkt wird.

3. Verfahren nach Anspruch 2, **dadurch gekennzeichnet, dass** zumindest eine Untereinheit (19) der Bewegungseinrichtung relativ zur Plattform (4) bewegt wird, um die weitere Bewegung zu bewirken.

4. Verfahren nach Anspruch 3, **dadurch gekennzeichnet, dass** die zumindest eine Untereinheit (19) durch eine Welle (7) bewegt wird.

5. Verfahren nach zumindest einem der Ansprüche 2 bis 4, **dadurch gekennzeichnet, dass** der Laserstrahl durch zumindest einen gegenüber der Plattform (4) schwenkbar angeordneten Spiegel (15) abgelenkt wird.

6. Verfahren nach zumindest einem der Ansprüche 2 bis 4, **dadurch gekennzeichnet, dass** die Laseroptik (2) gegenüber der Plattform (4) beweglich gelagert ist, um den Laserstrahl zu führen.

7. Verfahren nach zumindest einem der vorherigen Ansprüche, **dadurch gekennzeichnet, dass** eine Temperatur des Kunststoffes mittels eines Pyrometers gemessen wird, wobei ein Messergebnis zur Auswertung und/oder Regelung des Verfahrens herangezogen wird.

8. Vorrichtung zum quasi-simultanen Verschweissen von Kunststoffen, **gekennzeichnet durch** einen Deltaroboter (1) mit einer Plattform (4), wobei der Plattform (4) eine Laseroptik (2) zugeordnet ist.

9. Vorrichtung nach Anspruch 8, **dadurch gekennzeichnet, dass** der Plattform (4) weiterhin ein erstes Ende eines optischen Leiters (13) zugeordnet ist, welches mit der Laseroptik (2) verbunden ist, wobei ein zweites Ende des optischen Leiters (13) mit einem Laser verbunden ist, wobei dieser Laser ausserhalb der Plattform (4) angeordnet ist.

10. Vorrichtung nach einem der Ansprüche 8 oder 9, **dadurch gekennzeichnet, dass** die Laseroptik (2) an einem Element festgelegt ist, welches drehbar an der Plattform (4) festgelegt ist.

11. Vorrichtung nach einem der Ansprüche 8 oder 9, **gekennzeichnet durch** zumindest einen gegenüber der Plattform (4) schwenkbar angeordneten Spiegel (15).

12. Vorrichtung nach einem der Ansprüche 10 oder 11, **gekennzeichnet durch** zumindest eine Welle (7), wobei ein erste Ende der Welle (7) dem drehbaren Element oder dem Spiegel (15) zugeordnet ist, geeignet, eine Bewegung des drehbaren Elements oder des Spiegels (15) zu bewirken, wobei ein zweites Ende der Welle (7) einem Antrieb (6) zugeordnet ist, welcher ausserhalb der Plattform (4) angeordnet ist.

13. Vorrichtung nach einem der Ansprüche 8 bis 12, **gekennzeichnet durch** ein Pyrometer.

14. Vorrichtung nach einem der Ansprüche 8 bis 13, **dadurch gekennzeichnet, dass** die Laseroptik (2) Halbzoll-Bauteile umfasst.

15. Verwendung eines Delta-Roboters (1) zum quasi-simultanen Verschweissen
von Kunststoffen.

## Claims

1. Method for quasi-simultaneous welding of at least two welding locations with a laser beam,
**characterised in that**
the laser beam emanates from a laser optic (2) which is associated with a platform (4) of a delta robot (1) and is guided by a movement of this platform (4).

2. Method according to claim 1, **characterized in that** the laser beam is guided by a combination of the movement of the platform (4) and a further movement which is effected by a motion device associated with the platform (4).

3. Method according to claim 2, **characterized in that** at least one subunit (19) of the motion device is moved relative to the platform (4) in order to effect the further movement.

4. Method according to claim 3, **characterized in that** the at least one subunit (19) is moved by a shaft (7).

5. Method according to at least one of claims 2 to 4, **characterized in that** the laser beam is deflected by at least one mirror (15) arranged pivotably relative to the platform (4).

6. Method according to at least one of claims 2 to 4, **characterized in that** the laser optic (2) is mounted movably relative to the platform (4) in order to guide the laser beam.

7. Method according to at least one of the previous claims, **characterized in that** a temperature of the plastic is measured by means of a pyrometer, a measurement result being used for evaluating and/or regulating the method.

8. Device for quasi-simultaneous welding of plastics,
**characterized by**
a delta robot (1) with a platform (4), wherein the platform (4) being associated with a laser optic (2).

9. Device according to claim 8, **characterized in that** the platform (4) is further associated with a first end of an optical conductor (13) which is connected to the laser optic (2), a second end of the optical conductor (13) being connected to a laser, this laser being arranged outside the platform (4).

10. Device according to any of claims 8 or 9, **characterized in that** the laser optic (2) is fixed to an element rotatably fixed to the platform (4).

11. Device according to one of claims 8 or 9, **characterized by** at least one mirror (15) pivotally arranged relative to the platform (4).

12. Device according to one of claims 10 or 11, **characterized by** at least one shaft (7), a first end of which shaft (7) is associated with the rotatable element or mirror (15) adapted to cause movement of the rotatable element or mirror (15), a second end of which shaft (7) is associated with a drive (6) arranged outside the platform (4).

13. Device according to claims 8 to 12, **characterized by** a pyrometer.

14. Device according to one of claims 8 to 13, **characterized in that** the laser optic (2) comprises half inch components.

15. Use of a delta robot (1) for quasi-simultaneous welding of plastics.

## Revendications

1. Procédé de soudage quasi simultané à au moins deux emplacements de soudage au moyen d'un faisceau laser,
**caractérisé par le fait que**
le faisceau laser provient d'une optique laser (2) qui est associée à une plate-forme (4) d'un robot delta (1) et est guidé par un mouvement de cette plate-forme (4).

2. Procédé selon la revendication 1, **caractérisé par le fait que** le faisceau laser est guidé par une combinaison du mouvement de la plate-forme (4) et d'un autre mouvement qui est provoqué par un dispositif de déplacement associé à la plate-forme (4).

3. Procédé selon la revendication 2, **caractérisé par le fait qu'**au moins une sous-unité (19) du dispositif de déplacement est déplacée par rapport à la plate-forme (4), pour provoquer l'autre mouvement.

4. Procédé selon la revendication 3, **caractérisé par le fait que** l'au moins une sous-unité (19) est déplacée par un arbre (7).

5. Procédé selon au moins l'une des revendications 2 à 4, **caractérisé par le fait que** le faisceau laser est dévié par au moins un miroir (15) disposé de manière pivotante par rapport à la plate-forme (4).

6. Procédé selon au moins l'une des revendications 2 à 4, **caractérisé par le fait que** l'optique laser (2) est montée de manière déplaçable par rapport à la plate-forme (4), pour guider le faisceau laser.

7. Procédé selon au moins l'une des revendications précédentes, **caractérisé par le fait qu'**une température de la matière plastique est mesurée au moyen d'un pyromètre, dans lequel un résultat de mesure est utilisé pour évaluer et/ou réguler le procédé.

8. Dispositif de soudage quasi simultané de matières plastiques,
**caractérisé par**
un robot delta (1) avec une plate-forme (4), où à la plate-forme (4) est associée une optique laser (2).

9. Dispositif selon la revendication 8, **caractérisé par le fait qu'**à la plate-forme (4) est par ailleurs associée une première extrémité d'un conducteur optique (13) qui est connecté à l'optique laser (2), dans lequel une deuxième extrémité du conducteur optique (13) est connectée à un laser, dans lequel ce laser est disposé en-dehors de la plate-forme (4).

10. Dispositif selon l'une des revendications 8 ou 9, **caractérisé par le fait que** l'optique laser (2) est fixée à un élément qui est fixé de manière rotative à la plate-forme (4).

11. Dispositif selon l'une des revendications 8 ou 9, **caractérisé par** au moins un miroir (15) disposé de manière pivotante par rapport à la plate-forme (4).

12. Dispositif selon l'une des revendications 10 ou 11, **caractérisé par** au moins un arbre (7), dans lequel une première extrémité de l'arbre (7) est associée à l'élément rotatif ou au miroir (15), de manière apte à provoquer un mouvement de l'élément rotatif ou du miroir (15), dans lequel une deuxième extrémité de l'arbre (7) est associée à un entraînement (6) qui est disposé en-dehors de la plate-forme (4).

13. Dispositif selon l'une des revendications 8 à 12, **caractérisé par** un pyromètre.

14. Dispositif selon l'une des revendications 8 à 13, **caractérisé par le fait que** l'optique laser (2) comporte des composants d'un demi-pouce.

15. Utilisation d'un robot delta (1) pour le soudage quasi-simultané de matières plastiques.
